# EUROPEAN PATENT APPLICATION

(11) **EP 4 036 158 A1**
(43) Date of publication of application: **03.08.2022**
(21) Application number: 20867087.7
(22) Date of filing: 24.09.2020
(51) Int. Cl.: C08J 5/10

(54) **MOLDED RESIN OBJECT AND METHOD FOR PRODUCING MOLDED RESIN OBJECT**

(30) Priority: 26.09.2019 JP 2019175209
(71) Applicant: SEKISUI CHEMICAL CO., LTD., Osaka-shi Osaka 530-8565 (JP)
(72) Inventor: TANABE, Tomoaki, Kyoto-shi, Kyoto 601-8105 (JP); NAKAHIRA, Takurou, Kyoto-shi, Kyoto 601-8105 (JP); OGASAWARA, Shigeru, Kyoto-shi, Kyoto 601-8105 (JP)
(74) Representative: Ter Meer Steinmeister & Partner
(86) International application number: PCT/JP2020/036103
(87) International publication number: WO 2021/060396

(57) **Abstract**

Provided is a resin molded body capable of increasing a flexural modulus. A resin molded body according to the present invention includes a urethane resin, long reinforcing fibers, an inorganic filler having an average particle diameter of 1 µm or more, and fine inorganic particles having an average particle diameter of 200 nm or less,
a content of the fine inorganic particles being 0.06 parts by weight or more and 3.00 parts by weight or less with respect to 100 parts by weight of the urethane resin.

## Description

### SPECIFICATION

### MOLDED RESIN OBJECT AND METHOD FOR PRODUCING MOLDED RESIN OBJECT

### TECHNICAL FIELD

The present invention relates to a resin molded body containing a urethane resin. The present invention also relates to a method for producing a resin molded body containing a urethane resin.

### BACKGROUND ART

In recent years, a resin molded body is used as a structural material of a building material or the like instead of wood or the like in some cases. For example, as a railroad crosstie, a crosstie made of a resin molded body may be used instead of wooden crosstie and concrete crosstie.

A crosstie made of a resin molded body is less likely to corrode than a wooden crosstie and a concrete crosstie, but may be inferior in bending characteristics. To improve the bending characteristics of a resin molded body, a filler or glass fiber may be blended in the resin molded body.

As an example of such a resin molded body, the following Patent Document 1 discloses a fiber-reinforced resin molded body obtained by progressing a large number of long glass fibers in one direction while aligning the glass fibers at predetermined intervals, sprinkling a urethane resin liquid from above the glass fiber group aligned in the middle of the progression, impregnating the urethane resin liquid into between the glass fibers, and then foaming and curing the urethane resin. In this fiber-reinforced resin molded body, a filler is dispersed, the content of the glass fibers is 50 parts by weight to 125 parts by weight, and the content of the filler is 15 parts by weight to 350 parts by weight with respect to 100 parts by weight of the urethane resin.

### Related Art Document

### Patent Document

Patent Document 1: JP H10-296863 A

### SUMMARY OF THE INVENTION

### PROBLEMS TO BE SOLVED BY THE INVENTION

When the bending elastic modulus of a resin molded body is small, the resin molded body is easily bent, and it is difficult to maintain the initial shape. Therefore, when a resin molded body having a small bending elastic modulus is used as, for example, a crosstie, the crosstie may be bent by the weight of placed load.

Examples of the method for increasing the bending elastic modulus of a resin molded body include a method in which long glass fibers are contained in a resin molded body. A resin molded body containing long glass fibers may be produced, for example, by impregnating long glass fibers with a raw material not containing long glass fibers as described in Patent Document 1.

From the viewpoint of reducing the production cost, it is preferable to reduce the use amount of long glass fibers and to exhibit a high bending elastic modulus. However, when the blending amount of the long glass fibers is reduced, a raw material not containing the long glass fibers is not well held between the long glass fibers, and the raw material drips down, and therefore it is difficult to obtain a resin molded body having a desired density, and it is difficult to obtain a resin molded body having a high bending elastic modulus.

To hold the raw material between the long glass fibers well, a method of increasing the viscosity of the raw material by controlling the production temperature or adding an inorganic filler may be used. However, in this method, the viscosity of the raw material may excessively increase, and as a result, the raw material is not uniformly impregnated into between the long glass fibers, and a hollow portion having a large size tends to be generated in the resulting resin molded body, or the bending elastic modulus tends to decrease. When the resin molded body is used as, for example, a crosstie, cracks or break may occur in the crosstie from the hollow portion as a starting point due to the weight of placed load.

An object of the present invention is to provide a resin molded body capable of increasing the bending elastic modulus. Another object of the present invention is to provide a method for producing a resin molded body capable of increasing the bending elastic modulus of the resulting resin molded body.

### MEANS FOR SOLVING THE PROBLEMS

According to a broad aspect of the present invention, there is provided a resin molded body including a urethane resin, long reinforcing fibers, an inorganic filler having an average particle diameter of 1 µm or more, and fine inorganic particles having an average particle diameter of 200 nm or less, a content of the fine inorganic particles being 0.06 parts by weight or more and 3.00 parts by weight or less with respect to 100 parts by weight of the urethane resin.

In a specific aspect of the resin molded body according to the present invention, the average particle diameter of the fine inorganic particles is 7 nm or more.

In a specific aspect of the resin molded body according to the present invention, the fine inorganic particles are derived from a thixotropic agent and contained.

In a specific aspect of the resin molded body according to the present invention, the long reinforcing fibers are long glass fibers.

In a specific aspect of the resin molded body according to the present invention, a volume content of the long reinforcing fibers is 7 vol% or more and 15 vol% or less in 100 vol% of the resin molded body.

In a specific aspect of the resin molded body according to the present invention, the inorganic filler is fly ash.

In a specific aspect of the resin molded body according to the present invention, the resin molded body is a foamed resin molded body.

According to a broad aspect of the present invention, there is provided a method for producing a resin molded body, the method including a mixing step of mixing a polyol compound, an isocyanate compound, an inorganic filler having an average particle diameter of 1 µm or more, and a thixotropic agent to obtain a first composition, an impregnation step of impregnating long reinforcing fibers with the first composition using an impregnation plate to obtain a curable resin composition and a curing step of curing the curable resin composition in a mold, the thixotropic agent containing fine inorganic particles having an average particle diameter of 200 nm or less, and a content of the fine inorganic particles in the first composition being 0.06 parts by weight or more and 3.00 parts by weight or less with respect to 100 parts by weight of a total of the polyol compound and the isocyanate compound in the first composition.

### EFFECT OF THE INVENTION

The resin molded body according to the present invention contains a urethane resin, long reinforcing fibers, an inorganic filler having an average particle diameter of 1 µm or more, and fine inorganic particles having an average particle diameter of 200 nm or less, in which a content of the fine inorganic particles is 0.06 parts by weight or more and 3.00 parts by weight or less with respect to 100 parts by weight of the urethane resin, and therefore the flexural modulus can increase.

The method for producing a resin molded body according to the present invention includes the following steps: a mixing step of mixing a polyol compound, an isocyanate compound, an inorganic filler having an average particle size of 1 µm or more, and a thixotropic agent to obtain a first composition; an impregnation step of impregnating long reinforcing fibers with the first composition using an impregnation plate to obtain a curable resin composition; and a curing step of curing the curable resin composition in a mold. In the method for producing a resin molded body according to the present invention, the thixotropic agent contains fine inorganic particles having an average particle diameter of 200 nm or less, and the content of the fine inorganic particles in the first composition is 0.06 parts by weight or more and 3.00 parts by weight or less with respect to 100 parts by weight of the total of the polyol compound and the isocyanate compound in the first composition. Because the method for producing a resin molded body according to the present invention is provided with the above-described configuration, the bending elastic modulus of the resulting resin molded body can increase.

### BRIEF DESCRIPTION OF DRAWINGS

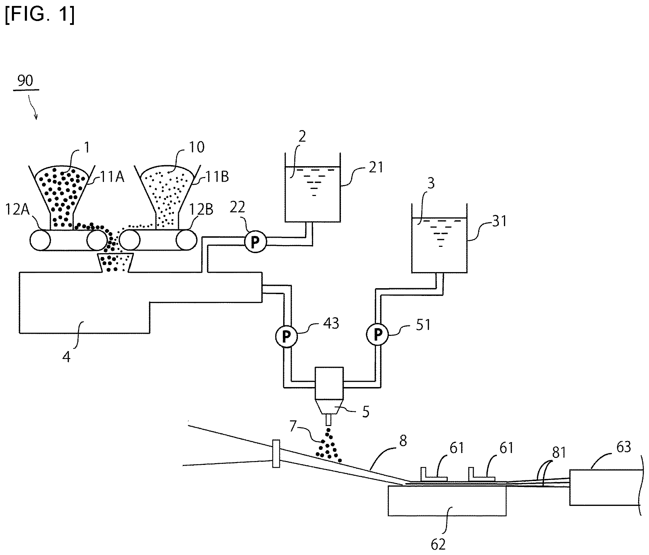

[Fig. 1] Fig. 1 is a view for explaining a method for producing a resin molded body according to a first embodiment of the present invention.

### MODE(S) FOR CARRYING OUT THE INVENTION

Hereinafter, the present invention will be described in detail.

The resin molded body according to the present invention includes a urethane resin, long reinforcing fibers, an inorganic filler having an average particle diameter of 1 µm or more, and fine inorganic particles having an average particle diameter of 200 nm or less. In the resin molded body according to the present invention, the content of the fine inorganic particles is 0.06 parts by weight or more and 3.00 parts by weight or less with respect to 100 parts by weight of the urethane resin.

Because the resin molded body according to the present invention is provided with the above-described configuration, the bending elastic modulus can increase. In the resin molded body according to the present invention, the bending elastic modulus can increase even when the content of the long reinforcing fibers is relatively small.

The resin molded body can be obtained by molding a curable resin composition including a polyol compound, an isocyanate compound, long reinforcing fibers, an inorganic filler having an average particle diameter of 1 µm or more, and fine inorganic particles having an average particle diameter of 200 nm or less.

Hereinafter, details of components contained in the resin molded body according to the present invention, details of components contained in the above-described curable resin composition, and the like will be described.

### [Urethane Resin]

The resin molded body contains a urethane resin. The curable resin composition contains a polyol compound and an isocyanate compound. The urethane resin may be obtained by reacting a polyol compound with an isocyanate compound.

### <Polyol Compound>

Polyol compound is a compound having two or more hydroxyl groups (-OH groups).

Examples of the polyol compound include polylactone polyols, polycarbonate polyols, aromatic polyols, alicyclic polyols, aliphatic polyols, polyester polyols, and polyether polyols. The polyol compound may be a polymer polyol. One kind of the polyol compound may be used alone, or two or more kinds thereof may be used in combination.

Examples of the polylactone polyols include polypropiolactone glycol, polycaprolactone glycol, and polyvalerolactone glycol.

Examples of the polycarbonate polyols include a dealcoholization reaction product of a hydroxyl group-containing compound and a carbonate compound. Examples of the hydroxyl group-containing compound include ethylene glycol, propylene glycol, butanediol, pentanediol, hexanediol, octanediol, and nonanediol. Examples of the carbonate compound include diethylene carbonate and dipropylene carbonate.

Examples of the aromatic polyol include bisphenol A, bisphenol F, phenol novolac, and cresol novolac.

Examples of the alicyclic polyols include cyclohexanediol, methylcyclohexanediol, isophoronediol, dicyclohexylmethanediol, and dimethyldicyclohexylmethanediol.

Examples of the aliphatic polyols include ethylene glycol, propylene glycol, butanediol, pentanediol, and hexanediol.

Examples of the polyester polyols include a dehydration condensation product of a polybasic acid and a polyhydric alcohol, a ring-opening polymerization product of a lactone, and a condensation product of a hydroxycarboxylic acid and a polyhydric alcohol. Examples of the polybasic acid include adipic acid, azelaic acid, sebacic acid, terephthalic acid, isophthalic acid, and succinic acid. Examples of the polyhydric alcohol include bisphenol A, ethylene glycol, 1,2-propylene glycol, 1,4-butanediol, diethylene glycol, 1,6-hexane glycol, and neopentyl glycol. Examples of the lactone include ε-caprolactone and α-methyl-ε-caprolactone. Examples of the hydroxycarboxylic acid include castor oil and a reaction product of castor oil and ethylene glycol.

Examples of the polyether polyols include a ring-opening polymer of an active hydrogen compound having two or more active hydrogen atoms and an alkylene oxide. Examples of the alkylene oxide include ethylene oxide, propylene oxide, and tetrahydrofuran. The active hydrogen compound preferably has a small molecular weight. Examples of the active hydrogen compound include diol compounds such as bisphenol A, ethylene glycol, propylene glycol, butylene glycol, and 1,6-hexanediol; triol compounds such as glycerin and trimethylolpropane; and amine compounds such as ethylenediamine and butylenediamine.

Examples of the polymer polyols include a graft polymer obtained by graft polymerization of an unsaturated organic compound to a polyol compound, a polybutadiene polyol, a modified polyol of a polyhydric alcohol, and a hydrogenated product thereof.

Examples of the polyol compound in the graft polymer include aromatic polyol, alicyclic polyol, aliphatic polyol, polyester polyol, and polyether polyol. Examples of the unsaturated organic compound in the graft polymer include acrylonitrile, styrene, and methyl (meth)acrylate.

Examples of the modified polyol of the polyhydric alcohol include a reaction modified product of a polyhydric alcohol and an alkylene oxide. Examples of the polyhydric alcohol include trihydric alcohols such as glycerin and trimethylolpropane; tetrahydric to octahydric alcohols such as pentaerythritol, sorbitol, mannitol, sorbitan, diglycerin, dipentaerythritol, sucrose, glucose, mannose, fructose, methyl glucoside, and derivatives thereof; phenol compounds such as phenol, phloroglucin, cresol, pyrogallol, catechol, hydroquinone, bisphenol A, bisphenol F, bisphenol S, 1-hydroxynaphthalene, 1,3,6,8-tetrahydroxynaphthalene, antrol, 1,4,5,8-tetrahydroxyanthracene, and 1-hydroxypyrene; polybutadiene polyols; castor oil polyols; (co)polymers of hydroxyalkyl (meth)acrylate; polyfunctional (for example, two or more and 100 or less functional groups) polyols such as polyvinyl alcohol; and condensates of phenol and formaldehyde (novolak). Examples of the alkylene oxide include alkylene oxides having two or more and six or less of carbon atoms. Specific examples of the alkylene oxide include ethylene oxide, 1,2-propylene oxide, 1,3-propylene oxide, 1,2-butylene oxide, and 1,4-butylene oxide. From the viewpoint of improving the properties and reactivity, the alkylene oxide is preferably 1,2-propylene oxide, ethylene oxide, or 1,2-butylene oxide, and more preferably 1,2-propylene oxide or ethylene oxide. One kind of the alkylene oxide may be used alone, or two or more kinds thereof may be used in combination.

The form of addition when two or more kinds of the alkylene oxides are used may be block addition, random addition, or both block addition and random addition.

From the viewpoint of enhancing the dispersibility of the inorganic filler, the polyol compound is preferably a polyester polyol or a polyether polyol.

### <Isocyanate Compound>

Isocyanate compound is a compound having one or more isocyanate groups (-NCO groups).

Examples of the isocyanate compound include aromatic polyisocyanates, alicyclic polyisocyanates, and aliphatic polyisocyanates. From the viewpoint of efficiently advancing the curing reaction, the isocyanate compound is preferably a polyisocyanate compound. One kind of the isocyanate compound may be used alone, or two or more kinds thereof may be used in combination.

Examples of the aromatic polyisocyanate include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, and polymethylene polyphenyl polyisocyanate.

Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate.

Examples of the aliphatic polyisocyanate include methylene diisocyanate, ethylene diisocyanate, propylene diisocyanate, tetramethylene diisocyanate, and hexamethylene diisocyanate.

The isocyanate compound is preferably diphenylmethane diisocyanate because it is easy to obtain and excellent in convenience.

### [Long Reinforcing Fiber]

The resin molded body contains long reinforcing fibers. The long reinforcing fibers are reinforcing fibers and are long fibers. The reinforcing fiber is a fibrous material having a certain strength. As the reinforcing fibers, for example, carbon fibers, glass fibers, aramid fibers, and the like are known. The long fibers have, for example, an average fiber length of 50 mm or more. The long reinforcing fibers may be a long reinforcing fiber sheet.

Examples of the long reinforcing fibers include long carbon fibers, long glass fibers, long aramid fibers, and lengthy reinforcing fibers. One kind of the long reinforcing fibers may be used alone, or two or more kinds thereof may be used in combination.

From the viewpoint of further increasing the bending elastic modulus, the long reinforcing fibers are preferably long glass fibers. The long glass fiber is a fibrous material obtained by melting and pulling glass into a fibrous form.

From the viewpoint of further increasing the bending elastic modulus, the fiber length of the long reinforcing fibers is preferably 50 mm or more, and more preferably 70 mm or more. The long reinforcing fibers can be cut into a desired size after pultrusion molding, and the fiber length of the long reinforcing fibers can be appropriately changed depending on the length to be cut. Therefore, the upper limit of the fiber length of the long reinforcing fibers is not particularly limited. From the viewpoint of enhancing dimensional accuracy, the fiber length of the long reinforcing fibers may be 10 m or less. Even when the long reinforcing fibers have a long fiber length, the long reinforcing fibers are impregnated with a composition containing components other than the long reinforcing fibers, and therefore the long reinforcing fibers are less likely to be cut or entangled. By pultrusion molding, molding can be performed even when the blending ratio of the long reinforcing fibers is increased.

The long reinforcing fibers are preferably fibers obtained by aligning and roving monofilaments. The fiber diameter of the monofilament is preferably 1 µm or more, more preferably 2 µm or more, and preferably 50 µm or less, more preferably 40 µm or less.

The long reinforcing fibers are preferably uniformly dispersed in the resin molded body. In the method for producing a resin molded body according to the present invention, a composition (first composition) containing a polyol compound, an isocyanate compound, an inorganic filler, and a thixotropic agent is easily impregnated between long reinforcing fibers, and the first composition is easily held between the long reinforcing fibers. As a result, the long reinforcing fibers are easily dispersed uniformly in the resin molded body.

The volume content of the long reinforcing fibers in 100 vol% of the resin molded body is preferably 5 vol% or more, more preferably 7 vol% or more, and preferably 15 vol% or less, more preferably 14 vol% or less. When the volume content of the long reinforcing fibers is the above lower limit or more, the bending elastic modulus of the resin molded body can be further enhanced. When the volume content of the long reinforcing fibers is the above upper limit or less, the production cost of the resin molded body can decrease.

The volume content of the long reinforcing fibers can be determined in accordance with the firing method described in JIS K7052.

The content of the long reinforcing fibers is preferably 40 parts by weight or more, more preferably 50 parts by weight or more, and preferably 380 parts by weight or less, more preferably 200 parts by weight or less with respect to 100 parts by weight of the urethane resin. When the content of the long reinforcing fibers is the above lower limit or more, the bending elastic modulus of the resin molded body can be further enhanced. When the content of the long reinforcing fibers is the above upper limit or less, the production cost of the resin molded body can decrease.

### [Inorganic Filler]

The resin molded body contains an inorganic filler having an average particle diameter of 1 µm or more. Inorganic filler is an inert substance dispersed and filled in the resin portion of the resin molded body.

Examples of the inorganic filler include powdery inorganic fillers. The inorganic filler is preferably a powdery inorganic filler. One kind of the inorganic filler may be used alone, or two or more kinds thereof may be used in combination.

Examples of the inorganic filler include carbonate compounds, minerals, sulfate compounds, silicate compounds, clay, nitrides, carbon compounds, titanium compounds, metal borate compounds, sulfides, carbides, ash, sand, and volcanic debris.

Examples of the carbonate compounds include calcium carbonate, magnesium carbonate, zinc carbonate, and barium carbonate. Examples of the minerals include dawsonite, hydrotalcite, mica, imogolite, sericite, and gypsum fibers. Examples of the sulfate compounds include calcium sulfate, barium sulfate, and magnesium sulfate. Examples of the silicate compounds include calcium silicate. Examples of the clay include talc, clay, montmorillonite, bentonite, activated clay, and sepiolite. Examples of the nitrides include aluminum nitride, boron nitride, and silicon nitride. Examples of the carbon compounds include carbon black, graphite, carbon balloon, and charcoal powder. Examples of the titanium compounds include potassium titanate and lead zirconate titanate. Examples of the metal borate compounds include aluminum borate. Examples of the sulfides include molybdenum sulfide. Examples of the carbides include silicon carbide. Examples of the ash include fly ash, coal ash, and Shirasu balloon. Examples of the sand include silica sand. Examples of the volcanic debris include pumice.

The inorganic filler is preferably a carbonate compound, a mineral, a sulfate compound, a silicate compound, clay, a nitride, a carbon compound, a titanium compound, a metal borate compound, a sulfide, a carbide, ash, sand, or volcanic debris. The inorganic filler preferably contains one or more kinds of inorganic filler selected from carbonate compounds, minerals, sulfate compounds, silicate compounds, clay, nitrides, carbon compounds, titanium compounds, metal borate compounds, sulfides, carbides, ash, sand, and volcanic debris. In these cases, the bending elastic modulus of the resin molded body further improves.

From the viewpoint of further improving the bending elastic modulus of the resin molded body, the inorganic filler is more preferably fly ash, talc, or calcium carbonate, further preferably fly ash or calcium carbonate, and particularly preferably fly ash. From the viewpoint of further improving the bending elastic modulus of the resin molded body, the inorganic filler is preferably type I fly ash or type II fly ash.

The type I fly ash and the type II fly ash are preferably fly ash conforming to the quality standards of JIS A6201. Because the fly ash conforming to the above quality standards has a relatively uniform particle diameter, the bending elastic modulus of the resin molded body can improve.

The type I fly ash is ash having a silicon dioxide content of 45% or more, a 45 µm sieve residue of 10% or less, and a specific surface area of 5000 cm²/g or more.

The type II fly ash is ash having a silicon dioxide content of 45% or more, a 45 µm sieve residue of 40% or less, and a specific surface area of 2500 cm²/g or more.

Type IV fly ash is ash having a silicon dioxide content of 45% or more, a 45 µm sieve residue of 70% or less, and a specific surface area of 1500 cm²/g or more.

From the viewpoint of increasing the bending elastic modulus, the average particle diameter of the inorganic filler is 1 µm or more. The average particle diameter of the inorganic filler is preferably 2 µm or more, more preferably 3 µm or more, and preferably 20 µm or less, more preferably 15 µm or less. When the average particle diameter of the inorganic filler is the above lower limit or more and the above upper limit or less, the inorganic filler is difficult to settle in the production process, and the filler is easily dispersed uniformly in the curable resin composition. As a result, a resin molded body in which the inorganic filler is uniformly dispersed can be favorably obtained and the bending elastic modulus of the resin molded body can further increase.

The average particle diameter of the inorganic filler is an average diameter measured on a volume basis and is a value of a median diameter (D50) of 50%. The average particle diameter (D50) of the inorganic filler can be determined by performing laser diffraction particle size distribution measurement.

The volume content of the inorganic filler in 100 vol% of the resin molded body is preferably 8 vol% or more, more preferably 10 vol% or more, and preferably 30 vol% or less, more preferably 25 vol% or less. When the volume content of the inorganic filler is the above lower limit or more and the above upper limit or less, the bending elastic modulus can further improve.

The volume content of the inorganic filler can be determined in accordance with the firing method described in JIS K7052.

The content of the inorganic filler is preferably 130 parts by weight or more, more preferably 140 parts by weight or more, and preferably 170 parts by weight or less, more preferably 160 parts by weight or less with respect to 100 parts by weight of the urethane resin. When the content of the inorganic filler is the above lower limit or more and the above upper limit or less, the bending elastic modulus of the resin molded body can be further enhanced.

### [Fine Inorganic Particle (Thixotropic Agent)]

The resin molded body contains fine inorganic particles having an average particle diameter of 200 nm or less. The fine inorganic particles are preferably contained derived from a thixotropic agent. The fine inorganic particles are preferably fine inorganic particles derived from a thixotropic agent. The resin molded body preferably contains fine inorganic particles derived from a thixotropic agent and having an average particle diameter of 200 nm or less. Thixotropic agent is a substance capable of imparting thixotropy to the added raw material. One kind of the fine inorganic particles may be used alone, or two or more kinds thereof may be used in combination.

Examples of the fine inorganic particles include substances similar to those of the inorganic filler. The fine inorganic particles and the inorganic filler may be the same substance or different substances.

Examples of the fine inorganic particles include silica, carbonate compounds, minerals, sulfate compounds, silicate compounds, clay, nitrides, carbon compounds, titanium compounds, metal borate compounds, sulfides, carbides, ash, sand, and volcanic debris.

Examples of the carbonate compounds include calcium carbonate, magnesium carbonate, zinc carbonate, and barium carbonate. Examples of the minerals include dawsonite, hydrotalcite, mica, imogolite, sericite, and gypsum fibers. Examples of the sulfate compounds include calcium sulfate, barium sulfate, and magnesium sulfate. Examples of the silicate compounds include calcium silicate. Examples of the clay include talc, clay, montmorillonite, bentonite, activated clay, and sepiolite. Examples of the nitrides include aluminum nitride, boron nitride, and silicon nitride. Examples of the carbon compounds include carbon black, graphite, and carbon balloon. Examples of the titanium compounds include potassium titanate and lead zirconate titanate. Examples of the metal borate compounds include aluminum borate. Examples of the sulfides include molybdenum sulfide. Examples of the carbides include silicon carbide. Examples of the ash include fly ash, coal ash, and Shirasu balloon. Examples of the sand include silica sand. Examples of the volcanic debris include pumice.

The fine inorganic particles are preferably silica, a carbonate compound, a mineral, a sulfate compound, a silicate compound, clay, a nitride, a carbon compound, a titanium compound, a metal borate compound, a sulfide, a carbide, ash, sand, or volcanic debris. The fine inorganic particles preferably contain one or more kinds of fine inorganic particles selected from silica, a carbonate compound, a mineral, a sulfate compound, a silicate compound, clay, a nitride, a carbon compound, a titanium compound, a metal borate compound, a sulfide, a carbide, ash, sand, and volcanic debris. In these cases, good thixotropy is imparted to the composition (first composition) containing the polyol compound, the isocyanate compound, the inorganic filler, and the thixotropic agent, and the bending elastic modulus of the resin molded body further improves.

From the viewpoint of imparting better thixotropy to the first composition and further improving the bending elastic modulus of the resin molded body, the fine inorganic particles are more preferably silica, a silicate compound, or calcium carbonate, further preferably silica or calcium carbonate, and particularly preferably silica.

From the viewpoint of imparting good thixotropy to the first composition and further improving the bending elastic modulus of the resin molded body, the average particle diameter of the fine inorganic particles is 200 nm or less.

The average particle diameter of the fine inorganic particles is preferably 7 nm or more, more preferably 10 nm or more, and preferably 180 nm or less, more preferably 160 nm or less. When the average particle diameter of the fine inorganic particles is the above lower limit or more, dispersibility of the fine inorganic particles in the first composition can be enhanced, and as a result, better thixotropy can be imparted to the first composition, and the bending elastic modulus of the resin molded body can further improve. When the average particle diameter of the fine inorganic particles is the above upper limit or less, better thixotropy can be imparted to the first composition, and the bending elastic modulus of the resin molded body can further improve.

The average particle diameter of the fine inorganic particles is an average diameter measured on a volume basis and is a value of a median diameter (D50) of 50%. The average particle diameter (D50) of the fine inorganic particles can be determined by performing laser diffraction particle size distribution measurement.

From the viewpoint of imparting good thixotropy to the first composition and further improving the bending elastic modulus of the resin molded body, the content of the fine inorganic particles is 0.06 parts by weight or more and 3.00 parts by weight or less with respect to 100 parts by weight of the urethane resin. The content of the fine inorganic particles is preferably 0.1 parts by weight or more and preferably 2.5 parts by weight or less with respect to 100 parts by weight of the urethane resin. When the content of the fine inorganic particles is the above lower limit or more and the above upper limit or less, the bending elastic modulus of the resin molded body can be further enhanced.

### [Other Components]

The resin molded body may contain other components than a urethane resin, long reinforcing fibers, an inorganic filler having an average particle diameter of 1 µm or more, and fine inorganic particles having an average particle diameter of 200 nm or less. The curable resin composition may contain other components than a polyol compound, an isocyanate compound, long reinforcing fibers, an inorganic filler having an average particle diameter of 1 µm or more, and fine inorganic particles (thixotropic agent) having an average particle diameter of 200 nm or less.

Examples of the other components include a foaming agent, a catalyst, a thixotropic agent different from fine inorganic particles having an average particle diameter of 200 nm or less, a flame retardant, and a foam stabilizer. One kind of each of the other components may be used alone, or two or more kinds thereof may be used in combination.

### Foaming agent:

The curable resin composition may or may not contain a foaming agent. When the curable resin composition contains a foaming agent, a foamed resin molded body can be obtained. A foamed resin molded body can be obtained by foaming the curable resin composition with a foaming agent. The foamed resin molded body has an advantage of being lightweight as compared with a non-foamed resin molded body.

Examples of the foaming agent include water and an organic halogen compound. The foaming agent is preferably water because it is easy to obtain and excellent in convenience. Water acts as a foaming agent by reacting with an isocyanate compound to generate CO₂. One kind of the foaming agent may be used alone, or two or more kinds thereof may be used in combination.

Examples of the organic halogen compound include organic chlorine compounds, organic fluorine compounds, organic bromine compounds, and organic iodine compounds. The organic halogen compound may be an organic halogen compound in which all hydrogen atoms are substituted with halogen atoms or may be an organic halogen compound in which some hydrogen atoms are substituted with halogen atoms. The organic halogen compound is preferably an organic chlorine compound or an organic fluorine compound from the viewpoint of improving the foamability at the time of forming the resin molded body and maintaining the thermal conductivity of the resin molded body low for a longer period of time.

Examples of the organic chlorine compound include saturated organic chlorine compounds and unsaturated organic chlorine compounds. Examples of the saturated organic chlorine compound include dichloroethane, propyl chloride, isopropyl chloride, butyl chloride, isobutyl chloride, pentyl chloride, and isopentyl chloride. The organic chlorine compound is preferably a saturated organic chlorine compound, and more preferably a saturated organic chlorine compound having two to five carbon atoms from the viewpoint of improving the foamability at the time of forming the resin molded body and maintaining the thermal conductivity of the resin molded body low for a longer period of time.

Examples of the organic fluorine compound include saturated organic fluorine compounds and unsaturated organic fluorine compounds.

Examples of the saturated organic fluorine compound include hydrofluorocarbons. Examples of the hydrofluorocarbon include difluoromethane (HFC32), 1,1,1,2,2-pentafluoroethane (HFC125), 1,1,1-trifluoroethane (HFC143a), 1,1,2,2-tetrafluoroethane (HFC134), 1,1,1,2-tetrafluoroethane (HFC134a), 1,1-difluoroethane (HFC152a), 1,1,1,2,3,3,3-heptafluoropropane (HFC227ea), 1,1,1,3,3-pentafluoropropane (HFC245fa), 1,1,1,3,3-pentafluorobutane (HFC365mfc), and 1,1,1,2,2,3,4,5,5,5-decafluoropentane (HFC4310mee).

Examples of the unsaturated organic fluorine compound include hydrofluoroolefins. Examples of the hydrofluoroolefin include 2,3,3,3-tetrafluoropropene (HFO-1234yf), 1,3,3,3-tetrafluoropropene (HFO-1234ze) (E and Z isomers), and 1,1,1,4,4,4-hexafluoro-2-butene (HFO1336mzz) (E and Z isomers).

Examples of the organic fluorine compound also include a compound having a chlorine atom, a fluorine atom, and a double bond. Examples of the compound having a chlorine atom, a fluorine atom, and a double bond include 1,2-dichloro-1,2-difluoroethene (E and Z isomers), and hydrochlorofluoroolefin. Examples of the hydrochlorofluoroolefin include 1-chloro-3,3,3-trifluoropropene (HCFO-1233zd) (E and Z isomers), 1-chloro-2,3,3-trifluoropropene (HCFO-1233yd) (E and Z isomers), 1-(4)chloro-1,3,3-trifluoropropene (HCFO-1233zb) (E and Z isomers), 2-chloro-1,3,3-trifluoropropene (HCFO-1233xe) (E and Z isomers), 2-chloro-2,2,3-trifluoropropene (HCFO-1233xc), 2-chloro-3,3,3-trifluoropropene (HCFO-1233xf), 3-chloro-1,2,3-trifluoropropene (HCFO-1233ye) (E and Z isomers), 3-chloro-1,1,2-trifluoropropene (HCFO-1233yc), 3,3-dichloro-3-fluoropropene, 1,2-dichloro-3,3,3-trifluoropropene (HCFO-1223xd) (E and Z isomers), 2-chloro-1,1,1,4,4,4-hexafluoro-2-butene (E and Z isomers), and 2-chloro-1,1,1,3,4,4,4-heptafluoro-2-butene (E and Z isomers).

The organic halogen compound is preferably a hydrochlorofluoroolefin, a hydrofluorocarbon, or a hydrofluoroolefin from the viewpoint of improving the foamability at the time of forming the resin molded body and maintaining the thermal conductivity of the resin molded body low for a longer period of time.

In consideration of foamability, the foaming agent may be used in an appropriate content.

### Catalyst:

The curable resin composition preferably contains a catalyst. Examples of the catalyst include a urethanization catalyst and a trimerization catalyst. One kind of the catalyst may be used alone, or two kinds thereof may be used in combination.

The curable resin composition preferably contains a urethanization catalyst. The urethanization catalyst promotes the reaction between the hydroxyl group of the polyol compound and the isocyanate group of the isocyanate compound to promote the formation of a urethane bond.

Examples of the urethanization catalyst include organic tin compounds such as dibutyltin dimalate, dibutyltin diuralate, and dibutylbis(oleoyloxy)stannane, tertiary amine compounds such as triethylamine, N-methylmorpholine bis(2-dimethylaminoethyl)ether, and N,N,N',N",N"-pentamethyldiethylenetriamine, N,N,N'-trimethylaminoethyl-ethanolamine, bis(2-dimethylaminoethyl)ether, N-methyl,N'-dimethylaminoethylpiperazine, and imidazole compounds in which a secondary amine functional group in an imidazole ring is substituted with a cyanoethyl group. One kind of the urethanization catalyst may be used alone, or two or more kinds thereof may be used in combination.

The urethanization catalyst can be used in an appropriate content so that the polyol compound and the isocyanate compound react well.

The trimerization catalyst promotes the trimerization reaction of the isocyanate group of the isocyanate compound and promotes the formation of an isocyanurate ring. Furthermore, the trimerization catalyst suppresses expansion of the resin molded body during combustion.

Examples of the trimerization catalyst include aromatic compounds, alkali metal salts of carboxylic acids, quaternary ammonium salts of carboxylic acids, and quaternary ammonium salts/ethylene glycol mixtures. Examples of the aromatic compound include tris(dimethylaminomethyl)phenol, 2,4-bis(dimethylaminomethyl)phenol, and 2,4,6-tris(dialkylaminoalkyl)hexahydro-S-triazine. Examples of the alkali metal salt of a carboxylic acid include potassium acetate and potassium 2-ethylhexanoate. One kind of the trimerization catalyst may be used alone, or two or more kinds thereof may be used in combination.

The trimerization catalyst can be used in an appropriate content so that the trimerization reaction is favorably promoted.

Thixotropic agent different from fine inorganic particles having an average particle diameter of 200 nm or less:
Examples of the thixotropic agent different from fine inorganic particles having an average particle diameter of 200 nm or less include an organic solvent and a surfactant.

### Flame retardant:

Examples of the flame retardant include nitrogen-containing non-halogen flame retardants, red phosphorus, phosphate esters, phosphoric acid salt-containing flame retardants, bromine-containing flame retardants, boron-containing flame retardants, antimony-containing flame retardants, and metal hydroxides.

### Foam stabilizer:

Examples of the foam stabilizer include polyoxyalkylene foam stabilizers such as polyoxyalkylene alkyl ethers, and silicone foam stabilizers such as organopolysiloxanes.

Crossties are, for example, buried in gravel or the like. Crossties are required to have a high bending elastic modulus from the viewpoint of reducing the amount of change in bending with respect to the weight of placed load. In addition, crossties are required to have high abrasion resistance from the viewpoint of preventing abrasion due to contact with surrounding stones and gravel. The resin molded body is suitably used, for example, as a crosstie because the resin molded body has a good bending elastic modulus.

When the resin molded body is used as a crosstie or the like, the size of the resin molded body is preferably 140 mm × 240 mm × 2600 mm (height (h) × width (w) × length (1)).

The height (h) is preferably 50 mm or more, more preferably 70 mm or more, further preferably 90 mm or more, and preferably 300 mm or less, more preferably 280 mm or less, further preferably 260 mm or less.

The width (w) is preferably 50 mm or more, more preferably 100 mm or more, further preferably 150 mm or more, and preferably 300 mm or less, more preferably 280 mm or less, further preferably 260 mm or less.

The length (1) is preferably 300 mm or more, more preferably 800 mm or more, further preferably 1200 mm or more, and preferably 5000 mm or less, more preferably 3800 mm or less, further preferably 3500 mm or less.

When the size of the resin molded body is the above lower limit or more and the above upper limit or less, the resin molded body has a good bending elastic modulus as a crosstie.

There is no particular limitation on the shape of the crosstie. The crosstie may be, for example, a crosstie having a rectangular parallelepiped shape, or may be a crosstie including a main body portion having a rectangular parallelepiped shape and a protruding portion protruding outward from the main body portion.

The crosstie (resin molded body) may have a length direction and a width direction. From the viewpoint of further improving the bending elastic modulus of the crosstie, the long reinforcing fibers are preferably disposed along the length direction of the crosstie (resin molded body).

### (Method for Producing Resin Molded Body)

The method for producing a resin molded body according to the present invention includes the following steps: (1) a mixing step of mixing a polyol compound, an isocyanate compound, an inorganic filler having an average particle size of 1 µm or more, and a thixotropic agent to obtain a first composition; (2) an impregnation step of impregnating long reinforcing fibers with the first composition using an impregnation plate to obtain a curable resin composition; and (3) a curing step of curing the curable resin composition in a mold. In the method for producing a resin molded body according to the present invention, the thixotropic agent contains fine inorganic particles having an average particle diameter of 200 nm or less, and the content of the fine inorganic particles in the first composition is 0.06 parts by weight or more and 3.00 parts by weight or less with respect to 100 parts by weight of the total of the polyol compound and the isocyanate compound in the first composition. The thixotropic agent may or may not contain a thixotropic agent other than fine inorganic particles having an average particle diameter of 200 nm or less.

The impregnation plate is a plate used for impregnation and is a plate for impregnation.

Because the method for producing a resin molded body according to the present invention is provided with the above-described configuration, the bending elastic modulus of the resulting resin molded body can increase. In the method for producing a resin molded body according to the present invention, because the first composition has thixotropy, in the impregnation step using an impregnation plate, the long reinforcing fibers are easily impregnated uniformly with the first composition. After the impregnation step, the first composition is favorably held between the long reinforcing fibers, and in this state, the curable resin composition can be cured in the curing step. Therefore, a resin molded body having a desired density and a high bending elastic modulus can be obtained.

In the method for producing a resin molded body according to the present invention, a resin molded body having a target density can be favorably produced.

Fig. 1 is a view for explaining a method for producing a resin molded body according to a first embodiment of the present invention. Fig. 1 is a view for explaining a method for manufacturing a resin molded body which is a crosstie.

A manufacturing apparatus 90 includes a hopper 11A, a hopper 11B, a belt feeder 12A, a belt feeder 12B, an extruder 4 with a built-in screw, a pump 43, a first raw material tank 21, a pump 22, a second raw material tank 31, a pump 51, a mixing and spraying device 5, a kneading plate 61, an impregnation plate 62, and a mold 63 having a heating unit.

### <Mixing Step>

An inorganic filler 1 having an average particle diameter of 1 µm or more is charged into the hopper 11A, and then the inorganic filler 1 is conveyed by the belt feeder 12A and supplied to the extruder 4. A thixotropic agent 10 containing fine inorganic particles having an average particle diameter of 200 nm or less is charged into the hopper 11B, and then the thixotropic agent 10 is conveyed by the belt feeder 12B and supplied to the extruder 4. A first raw material 2 is charged into the first raw material tank 21 and mixed. The first raw material 2 is a liquid containing a polyol compound and a foaming agent. The first raw material 2 is supplied to the extruder 4 by a pump 22. In the extruder 4, the inorganic filler 1, the thixotropic agent 10, and the first raw material 2 are mixed by the rotation of the screw of the extruder 4, and a mixed liquid (hereinafter, it may be referred to as "mixed liquid A") of the inorganic filler 1, the thixotropic agent 10, and the first raw material 2 is obtained. The first raw material may not contain a foaming agent. The first raw material may contain a urethanization catalyst and a foam stabilizer.

A second raw material 3 is charged into the second raw material tank 31. The second raw material 3 is a polyisocyanate compound.

The mixed liquid A is supplied to the mixing and spraying device 5 by the pump 43. The second raw material 3 is supplied to the mixing and spraying device 5 by the pump 51. In the mixing and spraying device 5, the mixed liquid A and the second raw material 3 are uniformly mixed to obtain a first composition 7 (a mixed liquid of a polyol compound, an isocyanate compound, an inorganic filler, a thixotropic agent, and a foaming agent).

<Impregnation Step>

The first composition 7 is sprinkled from a discharge port of the mixing and spraying device 5 over a long reinforcing fiber bundle 8, which is a fiber bundle of long reinforcing fibers. The long reinforcing fibers are long glass fibers, and the long reinforcing fiber bundle 8 is a long glass fiber bundle.

The first composition 7 and the long reinforcing fiber bundle 8 are kneaded between the kneading plate 61 and the impregnation plate 62, and the first composition 7 is uniformly impregnated into between the respective long reinforcing fibers constituting the long reinforcing fiber bundle 8. In this way, a curable resin composition 81 is obtained. Because the first composition 7 contains the thixotropic agent 10, the first composition 7 is uniformly impregnated into between respective long reinforcing fibers constituting the long reinforcing fiber bundle 8, and the first composition 7 is well held between respective long reinforcing fibers.

### <Curing Step>

The curable resin composition 81 is transferred to the mold 63, and the curable resin composition 81 is foamed and cured in the mold 63, whereby a foamed resin molded body corresponding to the shape of the mold 63 can be produced. The foamed resin molded body can be continuously produced by sequentially transferring the curable resin composition 81 to the mold 63. The heating temperature of the mold is, for example, 40°C to 80°C.

The polyol compound and the isocyanate compound can be used in an appropriate blending amount so as to efficiently form a urethane bond. The content of the isocyanate compound in the first composition is preferably 100 parts by weight or more, more preferably 120 parts by weight or more, further preferably 130 parts by weight or more, and preferably 180 parts by weight or less, more preferably 160 parts by weight or less, further preferably 150 parts by weight or less with respect to 100 parts by weight of the polyol compound in the first composition. When the content of the isocyanate compound is the above lower limit or more and the above upper limit or less, the reaction efficiency between the polyol compound and the isocyanate compound can be enhanced, the amount of the unreacted polyol compound or the unreacted isocyanate compound decreases, and a resin molded body having a better bending elastic modulus is likely to be formed.

The content of the long reinforcing fibers in the curable resin composition is preferably 40 parts by weight or more, more preferably 50 parts by weight or more, and preferably 380 parts by weight or less, more preferably 300 parts by weight or less, further preferably 200 parts by weight or less with respect to 100 parts by weight of the total of the polyol compound and the isocyanate compound in the curable resin composition. When the content of the long reinforcing fibers is the above lower limit or more, the bending elastic modulus can be further enhanced. When the content of the long reinforcing fibers is the above upper limit or less, the first composition is easily impregnated into between the long reinforcing fibers, and the bending elastic modulus of the resin molded body can increase.

The content of the inorganic filler in the first composition is preferably 40 parts by weight or more, more preferably 60 parts by weight or more, and preferably 240 parts by weight or less, more preferably 200 parts by weight or less with respect to 100 parts by weight of the total of the polyol compound and the isocyanate compound in the first composition. When the content of the inorganic filler is the above lower limit or more and the above upper limit or less, the bending elastic modulus of the resin molded body can further improve.

The content of the thixotropic agent in the first composition is preferably 0.06 parts by weight or more, more preferably 0.1 parts by weight or more, and preferably 3.00 parts by weight or less, more preferably 2.5 parts by weight or less with respect to 100 parts by weight of the total of the polyol compound and the isocyanate compound in the first composition. When the content of the thixotropic agent is the above lower limit or more and the above upper limit or less, thixotropy can be favorably imparted, and the bending elastic modulus of the resin molded body can further improve.

The content of the fine inorganic particles in the first composition is preferably 0.06 parts by weight or more, more preferably 0.1 parts by weight or more, and preferably 3.00 parts by weight or less, more preferably 2.5 parts by weight or less with respect to 100 parts by weight of the total of the polyol compound and the isocyanate compound in the first composition. When the content of the fine inorganic particles is the above lower limit or more and the above upper limit or less, thixotropy can be favorably imparted, and the bending elastic modulus of the resin molded body can further improve.

The first composition containing the thixotropic agent has thixotropy. From the viewpoint of favorably holding the first composition between the long reinforcing fibers, the viscosity of the first composition at 20°C and 10 rpm is preferably 5000 cps or more, more preferably 5500 cps or more, and preferably 12000 cps or less, more preferably 10000 cps or less. From the viewpoint of impregnating long reinforcing fibers well with the first composition, the viscosity of the first composition at 20°C and 200 rpm is preferably 500 cps or more, more preferably 700 cps or more, further preferably 1000 cps or more, particularly preferably 2000 cps or more, and most preferably 2200 cps or more. From the viewpoint of impregnating long reinforcing fibers well with the first composition, the viscosity of the first composition at 20°C and 200 rpm is preferably 5000 cps or less, more preferably 4000 cps or less, and further preferably 3500 cps or less.

The viscosity can be measured using, for example, a Brookfield viscometer.

Hereinafter, the present invention will be specifically described with reference to Examples and Comparative Examples. The present invention is not limited to the following examples.

The following materials were prepared.

### (Polyol compound)

Polyether polyol ("9158" manufactured by Sumika Covestro Urethane Co., Ltd.)

### (Isocyanate compound)

Diphenylmethane diisocyanate ("Polymeric MDI" manufactured by Tosoh Corporation)

### (Long reinforcing fiber)

Long glass fiber (obtained by aligning and roving a large number of monofilaments having a fiber diameter of 6 µm to 20 µm)

### (Inorganic filler)

Type I fly ash ("Type I fly ash" manufactured by Shikoku Electric Power Co., Inc., average particle diameter: 10 µm)

### (Thixotropic agent)

### Silica ("AEROSIL 200" manufactured by Nippon Aerosil Co., Ltd., average particle diameter: 20 nm)

The average particle diameters of the inorganic filler and the thixotropic agent were measured using laser diffraction particle size distribution measurement.

### (Foaming agent)

Water
(Catalyst)
Dibutyltin dimalate
Tertiary amine catalyst ("TOYOCAT-DB30" manufactured by Tosoh Corporation)

### (Foam stabilizer)

Silicon oil ("SZ-1729" manufactured by Dow Corning Toray Silicone Co., Ltd.)

### (Example 1)

A foamed resin molded body having the composition shown in Table 1 was produced by the method shown in Fig. 1. The target density of the foamed resin molded body was 0.8 g/cm³.

### (Preparation of curable resin composition)

The polyol compound, the foaming agent, the catalyst, and the foam stabilizer were mixed to obtain a first raw material in Fig. 1. The first raw material, the inorganic filler, and the thixotropic agent were mixed to obtain a mixed liquid A. An isocyanate compound as a second raw material was added to and mixed with the obtained mixed liquid A to obtain a first composition. The obtained first composition was impregnated into between the long reinforcing fibers to prepare a curable resin composition.

### (Production of resin molded body and crosstie)

The obtained curable resin composition was injected into a rectangular tubular mold (length 50 mm × width 50 mm), and then heated in an oven at 60°C for 50 minutes to be foamed and cured, whereby a resin molded body (foamed resin molded body) was obtained from the tubular mold. The resin molded body was cut into a length of 390 mm to obtain a crosstie having a length of 50 mm × a width of 50 mm × a length of 390 mm.

### (Examples 2 and 3 and Comparative Examples 1 to 3)

A foamed resin molded body having the composition shown in Table 1 was produced in the same manner as in Example 1. The target density of the foamed resin molded body was 0.8 g/cm³.

### (Evaluation)

### (1) Viscosity of First Composition

The viscosity of the first composition at 20°C and 10 rpm and the viscosity of the first composition at 20°C and 200 rpm were measured using a Brookfield viscometer ("Digital Rotary Viscometer" manufactured by Viscotech Co., Ltd.).

### (2) Volume Content of Long Reinforcing Fibers in 100 vol% of Resin Molded Body

The obtained crosstie was cut into a length of 10 mm × a width of 10 mm × a thickness of 10 mm. Using the cut crosstie, the volume content of the long reinforcing fibers in 100 vol% of the resin molded body was determined in accordance with the firing method described in JIS K7052.

### (3) Density

The density of the obtained crosstie was calculated by dividing the weight of the crosstie by the volume of the crosstie.

### (4) Bending Elastic Modulus

The bending elastic modulus of the obtained crosstie was measured in accordance with JIS E1203. The bending elastic modulus was measured in a thermostatic chamber at 23 ± 5°C with the following sample dimensions under the following measurement conditions.

Sample dimensions: length 390 mm ± 2 mm, width 39 mm ± 1 mm, thickness 15 mm ± 1 mm
Distance between supporting points: 225 mm
Crosshead speed: 2 mm/min

### [Criteria for Determining Bending Elastic Modulus]

∘: bending elastic modulus of 6000 MPa or more
×: bending elastic modulus is less than 6000 MPa

The compositions and results are shown in Table 1 below.

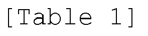

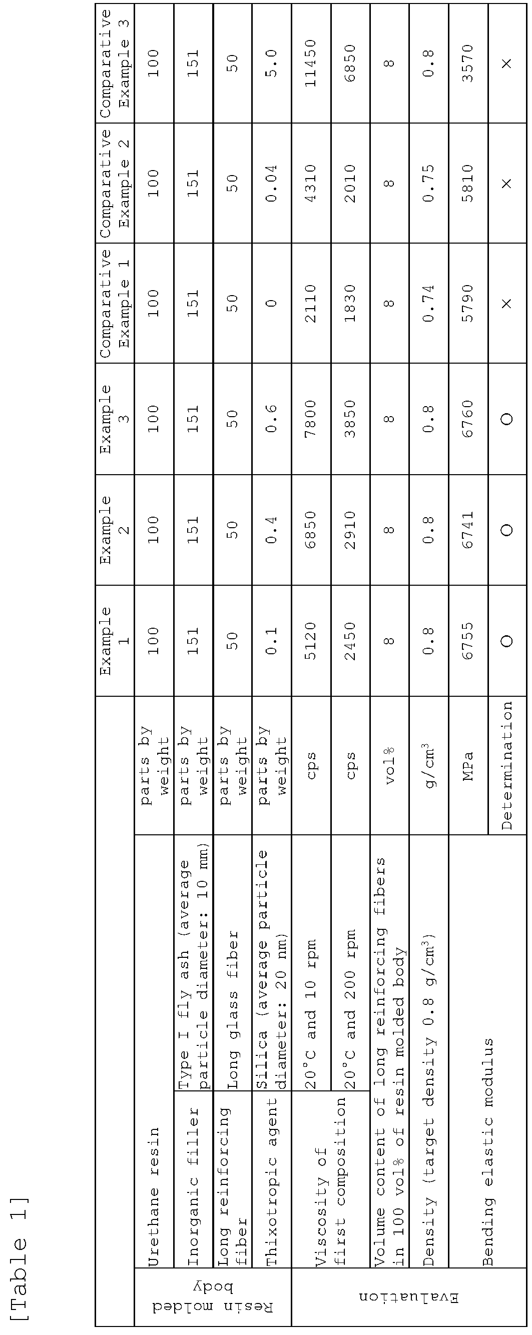

In Examples 1 to 3, because the first composition contains a thixotropic agent, a resin molded body having a good density and a high bending elastic modulus was obtained. On the other hand, in Comparative Example 1, because the first composition does not contain a thixotropic agent, a resin molded body having a density lower than the target density was obtained, and the bending elastic modulus of the resin molded body was also low. In Comparative Example 2, because the content of the thixotropic agent contained in the first resin composition was small, a resin molded body having a density lower than the target density was obtained, and the bending elastic modulus of the resin molded body was also low. In addition, in Comparative Example 3, because the content of the thixotropic agent contained in the first composition was large, the viscosity of the first composition excessively increased in the impregnation step, and therefore there were portions between the long reinforcing fibers that were not impregnated with the first composition. Therefore, in Comparative Example 3, the bending elastic modulus of the resin molded body was low. Comparison between Examples 1 to 3 and Comparative Examples 1 and 2 (in particular, Example 1 and Comparative Example 2) shows that when the content of the fine inorganic particles is 0.06 parts by weight or more with respect to 100 parts by weight of the urethane resin, the bending elastic modulus remarkably increases as compared with the case where the content of the fine inorganic particles is less than 0.06 parts by weight with respect to 100 parts by weight of the urethane resin.

### EXPLANATION OF SYMBOLS

- 1:: Inorganic filler
- 2:: First raw material
- 3:: Second raw material
- 4:: Extruder
- 5:: Mixing and spraying device
- 7:: First composition
- 8:: Long reinforcing fiber bundle
- 10:: Thixotropic agent
- 11A, 11B:: Hopper
- 12A, 12B:: Belt feeder
- 21:: First raw material tank
- 22:: Pump
- 31:: Second raw material tank
- 43:: Pump
- 51:: Pump
- 61:: Kneading plate
- 62:: Impregnation plate
- 63:: Mold
- 81:: Curable resin composition
- 90:: Manufacturing apparatus

## Claims

1. A resin molded body, comprising a urethane resin, long reinforcing fibers, an inorganic filler having an average particle diameter of 1 µm or more, and fine inorganic particles having an average particle diameter of 200 nm or less,
a content of the fine inorganic particles being 0.06 parts by weight or more and 3.00 parts by weight or less with respect to 100 parts by weight of the urethane resin.

2. The resin molded body according to claim 1, wherein the average particle diameter of the fine inorganic particles is 7 nm or more.

3. The resin molded body according to claim 1 or 2, wherein the fine inorganic particles are derived from a thixotropic agent and contained.

4. The resin molded body according to any one of claims 1 to 3, wherein the long reinforcing fibers are long glass fibers.

5. The resin molded body according to any one of claims 1 to 4, wherein a volume content of the long reinforcing fibers is 7 vol% or more and 15 vol% or less in 100 vol% of the resin molded body.

6. The resin molded body according to any one of claims 1 to 5, wherein the inorganic filler is fly ash.

7. The resin molded body according to any one of claims 1 to 6, being a foamed resin molded body.

8. A method for producing a resin molded body, the method comprising:
a mixing step of mixing a polyol compound, an isocyanate compound, an inorganic filler having an average particle diameter of 1 µm or more, and a thixotropic agent to obtain a first composition;
an impregnation step of impregnating long reinforcing fibers with the first composition using an impregnation plate to obtain a curable resin composition; and
a curing step of curing the curable resin composition in a mold,
the thixotropic agent containing fine inorganic particles having an average particle diameter of 200 nm or less, and
a content of the fine inorganic particles in the first composition being 0.06 parts by weight or more and 3.00 parts by weight or less with respect to 100 parts by weight of a total of the polyol compound and the isocyanate compound in the first composition.
